# EUROPEAN PATENT SPECIFICATION

(11) **EP 3 472 926 B1**
(45) Date of publication and mention of the grant of the patent: **17.06.2020**
(21) Application number: 16730393.2
(22) Date of filing: 20.06.2016
(51) Int. Cl.: H02K 3/16, H02K 3/28, H02K 11/00, H02K 16/04

(54) **SYSTEMS AND METHODS FOR REDUCTION OF TORSIONAL OSCILLATIONS IN TURBOMACHINERY SYSTEMS**
SYSTEME UND VERFAHREN ZUR REDUZIERUNG VON TORSIONSSCHWINGUNGEN IN TURBOMASCHINEN-SYSTEMEN
SYSTÈMES ET PROCÉDÉS POUR REDUCTION DE VIBRATIONS DE TORSION DANS DES SYSTÈMES TURBOMACHINES

(43) Date of publication of application: 24.04.2019
(73) Proprietor: Nuovo Pignone Tecnologie - S.r.l., 50127 Florence (IT)
(72) Inventor: TENCA, Pierluigi, 85748 Munchen (DE); ROTONDO, Paola, 50127 Florence (IT); SGRO', Daniele, 50127 Florence (IT); MEUCCI, Francesco, 50127 Florence (IT)
(74) Representative: BRP Renaud & Partner mbB Rechtsanwälte Patentanwälte Steuerberater
(86) International application number: PCT/EP2016/064199
(87) International publication number: WO 2017/220118

(56) References cited:
- EP-A2- 1 643 122
- EP-A2- 2 020 744
- WO-A1-2004/112234

## Description

### BACKGROUND

The field of the disclosure relates generally to turbomachinery systems, and, more specifically, to electrical machine auxiliary stator windings and systems and methods for reduction of torsional oscillations in turbomachinery systems.

In known turbomachinery systems employing electrical machines which either drive turbomachines, e.g., electrical motors in pumping operations and compression plants, or electrical machines driven by turbomachines, e.g., electrical power generators, complex interactions of electrical networks with torsional dynamics of shafts in rotating equipment trains cause sub-synchronous torsional interactions (SSTIs). In such known turbomachinery systems, e.g., liquefied natural gas compression plants, SSTIs cause torsional oscillations resulting in increased maintenance costs, reduced operational efficiency, and equipment service life reduction.

WO 2004/112234 A1, EP 1 643 122 A2 and EP 2 020 744 A2 each disclose a turbomachinery system wherein torsional vibrations of the machine shaft are dampened by producing a damping torque in the already existing stator windings.

In at least some known turbomachinery systems employing electrical machines, SSTIs experienced by shafts and rotating machinery coupled thereto are caused by torque imbalances arising in electrical machines including motors and generators. Such electrical machines, shafts, and associated rotating machinery often form long trains of equipment in which SSTIs arising in one portion of the train generate undesirable effects not only at that location, but at various other locations distant from the initial point of origin. Also, in such known turbomachinery systems, mitigation of SSTIs and resulting aberrant torque is expensive, requires substantial modification of existing systems and plant equipment, and is subject to design constraints from existing electrical and mechanical loads. Further, in such known turbomachinery systems, known SSTI and torque mitigation devices and systems are complex, require elaborate control systems, are cumbersome to integrate into existing plant operations, and require complete plant shutdown for their installation and maintenance.

### BRIEF DESCRIPTION

In one aspect, an electrical machine according to claim 1 is provided. The turbomachinery system includes a shaft and a stator. The stator includes at least one stator winding and at least one auxiliary winding proximate the at least one stator winding. The at least one stator winding and the at least one auxiliary winding define a cavity within the stator, where the shaft is configured to be positioned at least partially within the cavity. The at least one auxiliary winding is configured to alternately energize and de-energize to alternately apply and remove, respectively, a corrective torque to the shaft to dampen torsional oscillations thereof.

In another aspect, a turbomachinery system according to claim 11 is provided. The turbomachinery system includes an auxiliary power converter and a turbomachine coupled to an electrical machine through a shaft extending therebetween. The electrical machine includes a stator including at least one stator winding and at least one auxiliary winding proximate the at least one stator winding. The at least one stator winding and the at least one auxiliary winding define a cavity within the stator, where the shaft is configured to be positioned at least partially within the cavity. The at least one auxiliary winding is configured to alternately energize and de-energize to alternately apply and remove, respectively, a corrective torque to the shaft to dampen torsional oscillations thereof.

In yet another aspect, a method according to claim 15 is provided, wherein damping torsional oscillations of a shaft in a turbomachinery system is performed. The turbomachinery system includes a turbomachine coupled to an electrical machine by the shaft extending therebetween. The electrical machine includes a stator including at least one stator winding and at least one auxiliary winding proximate the at least one stator winding. The at least one stator winding and the at least one auxiliary winding define a cavity within the stator. The shaft is configured to be positioned at least partially in the cavity. The method includes detecting, through a sensor coupled to the turbomachinery system, a physical characteristic of the turbomachinery system representative of torsional oscillations. The method also includes determining, through data transmitted by the sensor, a presence of torsional oscillations.

The method further includes energizing the at least one auxiliary winding to apply a corrective torque to the shaft to dampen torsional oscillations thereof.

### DRAWINGS

These and other features, aspects, and advantages of the present disclosure will become better understood when the following detailed description is read with reference to the accompanying drawings in which like characters represent like parts throughout the drawings, wherein:
FIG. 1 is a schematic diagram of an exemplary turbomachinery system;
FIG. 2 is a cross-sectional view of an exemplary electrical machine that may be used with the turbomachinery system shown in FIG. 1; and
FIG. 3 is a flowchart diagram of an exemplary method of damping torsional oscillations of a shaft in a turbomachinery system that may be used with the turbomachinery system shown in FIG. 1.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged, and such ranges are identified and include all the subranges contained therein unless context or language indicates otherwise.

As used herein, the terms "processor" and "computer" and related terms, e.g., "processing device", "computing device", and "controller" are not limited to just those integrated circuits referred to in the art as a computer, but broadly refers to a microcontroller, a microcomputer, a programmable logic controller (PLC), an application specific integrated circuit (AISC), and other programmable circuits, and these terms are used interchangeably herein. In the embodiments described herein, memory may include, but is not limited to, a computer-readable medium, such as a random access memory (RAM), and a computer-readable non-volatile medium, such as flash memory. Alternatively, a floppy disk, a compact disc - read only memory (CD-ROM), a magneto-optical disk (MOD), and/or a digital versatile disc (DVD) may also be used. Also, in the embodiments described herein, additional input channels may be, but are not limited to, computer peripherals associated with an operator interface such as a mouse and a keyboard. Alternatively, other computer peripherals may also be used that may include, for example, but not be limited to, a scanner. Furthermore, in the exemplary embodiment, additional output channels may include, but not be limited to, an operator interface monitor.

Furthermore, as used herein, the term "real-time" refers to at least one of the time of occurrence of the associated events, the time of measurement and collection of predetermined data, the time to process the data, and the time of a system response to the events and the environment. In the embodiments described herein, these activities and events occur substantially instantaneously.

The electrical machine auxiliary stator windings for reduction of torsional oscillations in turbomachinery systems and associated systems and methods described herein reduce sub-synchronous torsional interactions (SSTIs) of shafts and rotating machinery including electrical machines in rotating equipment trains. The embodiments described herein also mitigate undesirable effects of SSTIs and aberrant torques arising therefrom in turbomachinery systems. The embodiments described herein further reduce torque imbalances in electrical machines employed in turbomachinery systems. The electrical machine auxiliary stator windings for reduction of torsional oscillations in turbomachinery systems and associated systems and methods described herein also reduce operating and maintenance costs and increase operational efficiency of turbomachinery systems. The embodiments described herein further provide less complex and less expensive SSTI mitigation devices, systems, and methods that are easier to operate and integrate into existing plant designs. The embodiments described herein also enable installation and maintenance of SSTI mitigation devices and systems without shutting down turbomachinery system operations.

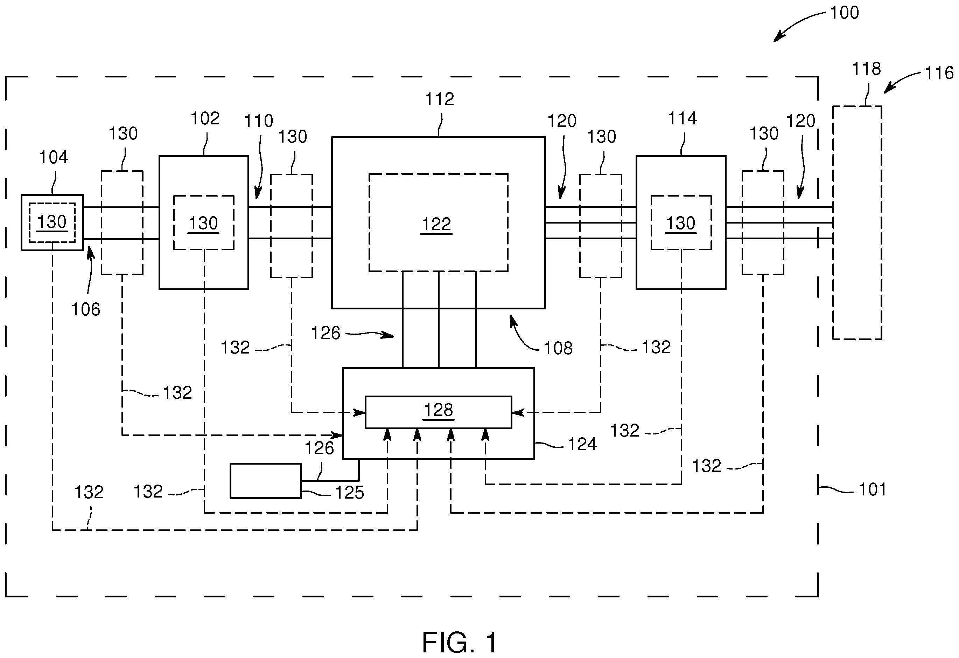

FIG. 1 is a schematic diagram of an exemplary turbomachinery system 100. In the exemplary embodiment, turbomachinery system 100 is situated in a turbomachinery facility 101 and includes a turbomachine 102 including, without limitation, at least one of a compressor for process fluid and a fluid pump. Turbomachinery system 100 also includes an auxiliary machine 104 including, without limitation, at least one of a compressor for process fluid and a fluid pump. Auxiliary machine 104 is rotatably coupled to turbomachine 102 through a first shaft 106. Turbomachinery system 100 further includes an electrical machine 108 rotatably coupled to auxiliary machine 104 through a second shaft 110. In the exemplary embodiment, electrical machine 108 is embodied in a motor 112, not of switched reluctance type, and turbomachine 102 is embodied in at least one of a compressor for process fluid and a fluid pump, and turbomachine facility 101 is embodied in at least one of a compression train and a pumping station. Turbomachinery system 100 also includes a motor power converter 114 coupled to an electrical power source 116. Power source 116, in the exemplary embodiment, is embodied in an alternating current (AC) grid 118 coupled to motor power converter 114 through 3-phase power lines 120. Motor power converter 114 is embodied in an AC-to-AC power converter coupled to motor 112 embodied in an AC motor through 3-phase power lines 120. In other embodiments, not shown, turbomachinery system 100 does not include auxiliary machine 104. In yet other alternative embodiments, turbomachine facility 101 is embodied in an electrical power generation facility, electrical machine 108 is embodied in a generator, not of switched reluctance type, and turbomachine 102 is configured to function as a prime mover for generator to supply electrical power to grid 118.

Turbomachinery system 100, in the exemplary embodiment, includes at least one auxiliary winding 122 coupled to motor 112 proximate a rotor, not shown, coupled to second shaft 110. Turbomachinery system 100 also includes an auxiliary power converter 124 coupled to auxiliary winding 122 through at least one auxiliary electrical line 126. Auxiliary power converter 124, in the exemplary embodiment, is embodied in an AC power converter including, without limitation, at least one of a direct current (DC)-to-AC power converter and an AC-to-AC power converter. Auxiliary winding 122 is embodied in three auxiliary windings 122, each auxiliary winding 122 of the three auxiliary windings 122 coupled to auxiliary power converter 124 through one respective auxiliary electrical line 126. A power supply 125 including, without limitation, at least one of a DC power supply and an AC power supply, is coupled to auxiliary power converter 124 through at least one auxiliary electrical line 126.

Turbomachinery system 100, in the exemplary embodiment, includes an auxiliary controller 128 coupled to auxiliary power converter 124. Auxiliary controller 128 is further coupled to at least one of auxiliary power converter 124 and power supply 125. Turbomachinery system 100 also includes at least one sensor 130 coupled to auxiliary controller 128. Sensor 130 is further coupled to at least one of first shaft 106 and second shaft 110. Sensor 130, in the exemplary embodiment, is coupled to second shaft 110 proximate motor 112. In other embodiments, not shown, sensor 130 is coupled to second shaft 110 distal motor 112 including, without limitation, proximate turbomachine 102. At least one sensor 130 is further coupled to at least one of turbomachine 102, motor power converter 114, auxiliary machine 104, and 3-phase power lines 120. In other embodiments, not shown, at least one sensor 130 is further coupled to other locations within turbomachinery system 100 other than at least one of first shaft 106, second shaft 110, turbomachine 102, motor power converter 114, auxiliary machine 104, and 3-phase power lines 120.

In operation, in the exemplary embodiment, shafts including, without limitation, first shaft 106 and second shaft 110 of turbomachinery system 100 are susceptible to torsional oscillations during operation of turbomachinery system 100. Sensor 130 is configured to detect a physical characteristic of turbomachinery system 100 representative of torsional oscillations and transmit a control signal 132 to auxiliary controller 128.

Physical characteristics representative of torsional oscillations of turbomachinery system 100 include, without limitation, at least one of a magnitude, a direction, and a frequency of an axial deflection of at least one of first shaft 106, second shaft 110, and additional shafts rotatably coupled to at least one of turbomachine 102, electrical machine 108, and auxiliary machine 104. Physical characteristics representative of torsional oscillations of turbomachinery system 100 also include, without limitation, at least one of a direction and an angular velocity of a rotation of at least one of first shaft 106, second shaft 110, and additional shafts rotatably coupled to at least one of turbomachine 102, electrical machine 108, and auxiliary machine 104. Physical characteristics representative of torsional oscillations of turbomachinery system 100 also include, without limitation, at least one of a magnitude, a direction, and a frequency of a torque associated with torsional oscillations of at least one of first shaft 106, second shaft 110, and additional shafts rotatably coupled to at least one of turbomachine 102, electrical machine 108, and auxiliary machine 104. Physical characteristics representative of torsional oscillations of turbomachinery system 100 further include, without limitation, at least one of a magnitude, a direction, and a frequency of a current feeding at least one of a rotor winding, not shown, of electrical machine 108 and a stator winding, not shown, of electrical machine 108. Physical characteristics representative of torsional oscillations of turbomachinery system 100 also include, without limitation, at least one of a magnitude, a direction, and a frequency of a voltage across electrical terminals, not shown, of at least one of rotor winding of electrical machine 108 and stator winding of electrical machine 108. Physical characteristics representative of torsional oscillations of turbomachinery system 100 further include, without limitation, at least one of a magnitude, a direction, and a frequency of at least one of an acoustic noise, a vibration, and an acceleration associated with at least one of electrical machine 108, turbomachine 102, auxiliary machine 104, auxiliary winding 122, first shaft 106, second shaft 110, additional shafts rotatably coupled to at least one of turbomachine 102, electrical machine 108, and auxiliary machine 104, and any other component of turbomachinery system 100 whereupon an occurrence of at least one of vibrations and accelerations is representative of torsional oscillations in turbomachinery system 100.

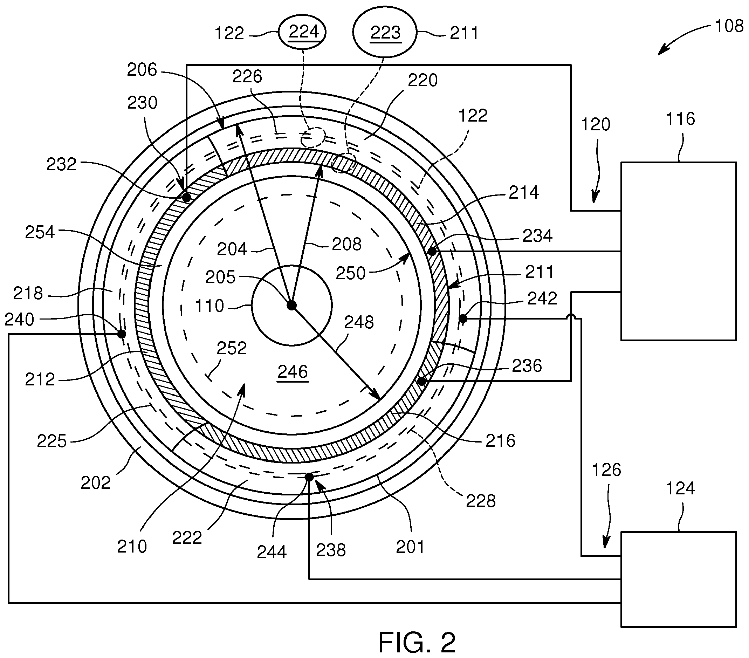

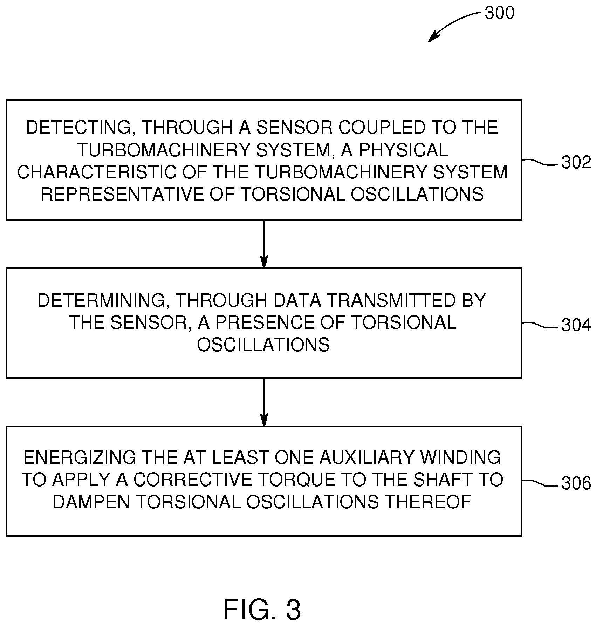

In operation of the exemplary embodiment, sensor 130 includes sensor types configured to detect and measure the aforementioned physical characteristics including, without limitation, deflection sensors, angular velocity sensors, torque sensors, electrical current sensors, voltage potential sensors, electrical frequency sensors, noise sensors, vibration sensors, and acceleration sensors. Auxiliary winding 122 is configured to alternately energize and de-energize to alternately apply and remove, respectively, a corrective torque to at least one of first shaft 106, second shaft 110, and additional shafts rotatably coupled to at least one of turbomachine 102, electrical machine 108, and auxiliary machine 104, as further shown and described below with reference to FIGs. 2 and 3. Auxiliary winding 122 is further configured to alternately apply and remove the corrective torque without reducing acoustic noise associated with torsional oscillations of at least one of first shaft 106, second shaft 110, and additional shafts rotatably coupled to at least one of turbomachine 102, electrical machine 108, and auxiliary machine 104, as described above. In other embodiments, not shown, alternately applying and removing the corrective torque reduces acoustic noise associated with torsional oscillations of at least one of first shaft 106, second shaft 110, and additional shafts rotatably coupled to at least one of turbomachine 102, electrical machine 108, and auxiliary machine 104.

In operation of the exemplary embodiment, receipt of control signal 132 including, without limitation, receipt of control signal 132 in real-time, by auxiliary controller 128 is indicative of a presence of torsional oscillations within turbomachinery system 100. In the exemplary embodiment, control signal 132 contains data having a first value when torsional oscillations are present in turbomachinery system 100, and control signal 132 contains data having a second value different from the first value when torsional oscillations are not present in turbomachinery system 100.

In operation of the exemplary embodiment, receipt of control signal 132 having the first value by auxiliary controller 128 enables a flow of electrical current from auxiliary power converter 124 to auxiliary winding 122 and thereby enables application of corrective torque by auxiliary winding 122 by energizing auxiliary winding 122. Further, receipt of control signal 132 having the second value by auxiliary controller 128 disables the flow of electrical current from auxiliary power converter 124 to auxiliary winding 122 and thereby removes corrective torque induced by auxiliary winding 122 by de-energizing auxiliary winding 122, as further described below with reference to FIGs. 2 and 3. In other embodiments, not shown, control signal 132 contains only the first value of data indicative of torsional oscillations in turbomachinery system 100, and control signal 132 is absent and contains no data when torsional oscillations are absent in turbomachinery system 100. In still other embodiments, control signal 132 contains a range of varying data values which not only indicate presence of torsional oscillations in turbomachinery system 100, but also quantify properties of torsional oscillations, e.g., for operational trending purposes. In yet other embodiments, not shown, auxiliary controller 128 is configured to adjust flow of electrical current from auxiliary power converter 124 to auxiliary winding 122 between a range of values including 0 (zero) amps to enable application of an amount of corrective torque by auxiliary winding 122 between a range of values including 0 newton·meters depending on an intensity of torsional oscillations requiring corrective torque.

FIG. 2 is a cross-sectional view of an exemplary electrical machine 108 that may be used with turbomachinery system 100 shown in FIG. 1. In the exemplary embodiment, electrical machine 108 is embodied in a 3-phase AC motor, e.g. motor 112 and includes an annular stator 201 positioned within an annular case 202. Stator 201 includes an outer radius 204 defined between a center axis 205 of second shaft 110 and a stator circumference 206 of stator 201. Stator 201 also includes an inner radius 208 defining a radially outward boundary of a cavity 210. Cavity 210, in the exemplary embodiment, is embodied in an annular cavity defined within stator 201. Electrical machine 108 also includes at least one stator winding 211 embodied in a plurality of stator windings 211 including a first stator winding 212, a second stator winding 214, and a third stator winding 216 extending around cavity 210 proximate inner radius 208 and auxiliary winding 122. In other embodiments, not shown, at least one of first stator winding 212, second stator winding 214, and third stator winding 216 extends around cavity 210 proximate outer radius 204. Inner radius 208, in the exemplary embodiment, is further defined between center axis 205 and a radially inward arcuate surface of stator winding 211. Inner radius 208 thus defines a radially outward boundary of cavity 210 and, in the exemplary embodiment, cavity 210 is embodied in an annular cavity defined within stator 210. Furthermore, in the exemplary embodiment, stator winding 211 and auxiliary winding 122 define cavity 210 within stator 210, and rotor 246 and second shaft 110 are positioned in cavity 210.

Stator 201 includes at least one slot 217 defined in stator 201. Slot 217, in the exemplary embodiment, is embodied in a plurality of slots 217 including a first slot 218, a second slot 220, and a third slot 222. First stator winding 212 is positioned in first slot 218. Similarly, second stator winding 214 and third stator winding 216 are positioned in second slot 220 and third slot 222, respectively. Electrical machine 108 includes at least one auxiliary winding 122 extending around cavity 210 proximate outer radius 204 and positioned in, including coupled to, stator 201 radially outward from first stator winding 212, second stator winding 214, and third stator winding 216. Auxiliary winding 122, in the exemplary embodiment, is also positioned in first slot 218, second slot 220, and third slot 222. In other embodiments, not shown, auxiliary winding 122 extends around cavity 210 proximate inner radius 208. In still other embodiments, not shown, auxiliary winding 122 is positioned in, including coupled to, stator 201 radially inward from at least one of first stator winding 212, second stator winding 214, and third stator winding 216. In yet other embodiments, not shown, auxiliary winding 122 is not positioned in, including coupled to, at least one of first slot 218, second slot 220, and third slot 222.

First stator winding 212, second stator winding 214, and third stator winding 216 have a first cross-sectional area 223, and auxiliary winding 122 has a second cross-sectional area 224. A value of first cross-sectional area 223 is greater than a value of second cross-sectional area 224. In other embodiments, not shown, the value of first cross-sectional area 223 is less than or equal to the value of second cross-sectional area 224. Auxiliary winding 122, in the exemplary embodiment, is embodied in a plurality of auxiliary windings 122 including a first phase auxiliary winding 225, a second phase auxiliary winding 226, and a third phase auxiliary winding 228 positioned in first slot 218, second slot 220, and third slot 222, respectively. Electrical machine 108 includes equal numbers of auxiliary windings 122 and stator windings 211. In other embodiments, not shown, electrical machine 108 includes different numbers of auxiliary windings 122 and stator windings 211. Stator winding 211 includes at least one stator terminal 230 embodied in a first stator terminal 232, a second stator terminal 234, and a third stator terminal 236 coupled to first stator winding 212, second stator winding 214, and third stator winding 216, respectively. First stator terminal 232, a second stator terminal 234, and a third stator terminal 236 are further coupled to at least one of power source 116 and a power converter, e.g., motor power converter 114, not shown in FIG. 2, through 3-phase power lines 120.

Auxiliary winding 122 also includes at least one auxiliary terminal 238 embodied in a first auxiliary terminal 240, a second auxiliary terminal 242, and a third auxiliary terminal 244 coupled to first phase auxiliary winding 225, second phase auxiliary winding 226, and third phase auxiliary winding 228, respectively. First auxiliary terminal 240, second auxiliary terminal 242, and third auxiliary terminal 244 are further coupled to auxiliary power converter 124 through auxiliary electrical lines 126. First auxiliary terminal 240, in the exemplary embodiment, is galvanically isolated from first stator terminal 232, second stator terminal 234, and third stator terminal 236. Similarly, second auxiliary terminal 242 is galvanically isolated from first stator terminal 232, second stator terminal 234, and third stator terminal 236. Likewise, in the exemplary embodiment, third auxiliary terminal 244 is galvanically isolated from first stator terminal 232, second stator terminal 234, and third stator terminal 236. In other embodiments, not shown, at least one of first auxiliary terminal 240, second auxiliary terminal 242, and third auxiliary terminal 244 is galvanically coupled to at least one of first stator terminal 232, second stator terminal 234, and third stator terminal 236, respectively. In still other embodiments, not shown, no more than one of first auxiliary terminal 240, second auxiliary terminal 242, and third auxiliary terminal 244 is galvanically coupled to at least one of first stator terminal 232, second stator terminal 234, and third stator terminal 236, respectively.

Electrical machine 108 includes a rotor 246 axially coupled to second shaft 110 and having a rotor radius 248 defined between center axis 205 and a rotor circumference 250. Rotor 246 also includes at least one rotor winding 252 extending around rotor 246 radially inward from rotor circumference 250. In other embodiments, not shown, rotor 246 does not include rotor winding 252.

In operation, in the exemplary embodiment, cavity 210 is sized and configured to receive rotor 246 and second shaft 110 to facilitate rotation of rotor 246 and second shaft 110 within cavity 210. Stator 201, in the exemplary embodiment, is embodied in an AC stator configured to induce a first rotating magnetic field through first stator winding 212, second stator winding 214, and third stator winding 216 when AC power is supplied thereto through 3-phase power lines 120. Stator 201 is also configured to induce a torque in rotor 246 and, likewise, in second shaft 110, through an electromechanical interaction between stator 201 and rotor 246 including, without limitation, a magnetic flux interaction across an air gap 254 defined between rotor circumference 250 and inner radius 208 of stator 201, i.e., a motor action of electrical machine 108. In other embodiments, not shown, electrical machine 108 is embodied in a generator including AC stator, and stator 201 is configured to induce an AC current through electromagnetic interactions with a rotating rotor 246, i.e., a generator action of electrical machine 108.

Auxiliary winding 122, in the exemplary embodiment, is configured to alternately energize and de-energize to alternately apply and remove, respectively, corrective torque to rotor 246 and to second shaft 110 coupled thereto. Auxiliary winding 122 is also configured to induce a second rotating magnetic field through first phase auxiliary winding 225, second phase auxiliary winding 226, and third phase auxiliary winding 228 when electrical current including, without limitation, AC power, is suppled thereto through auxiliary electrical lines 126. As such, auxiliary winding 122 applies corrective torque and is energized by the flow of electrical current thereto from auxiliary power converter 124. Auxiliary winding 122 is de-energized and corrective torque applied thereby is removed when the flow of electrical current thereto from auxiliary power converter 124 ceases. Auxiliary winding 122 is further configured to apply corrective torque to second shaft 110 in both a clockwise direction and a counterclockwise direction, depending on an alignment of phases of AC power transmitted to auxiliary winding 122 from auxiliary power converter 124 on auxiliary electrical line 126. In other embodiments, not shown, auxiliary winding 122 is further configured to apply corrective torque to second shaft 110 in only one of a clockwise and a counterclockwise direction.

In operation of the exemplary embodiment, second rotating magnetic field through auxiliary winding 122 interacts with at least one of rotor 246 and rotor winding 252 electromechanically through air gap 254. Depending on the direction at which second rotating magnetic field rotates through auxiliary winding 122, at least one of a clockwise and a counterclockwise corrective torque is applied to rotor 246 and second shaft 110 to dampen torsional oscillations thereof. The amount of corrective torque applied by auxiliary winding 122 to rotor 246 and second shaft 110 by energizing auxiliary winding 122 is dictated by user-determined parameters of turbomachinery system 100. User-determined parameters include, without limitation, parameters that depend on data contained in control signal 132. User-determined parameters also include, without limitation, design parameters of at least one of turbomachinery system 100, electrical machine 108, auxiliary power converter 124, and auxiliary controller 128. User-predetermined parameters further include, without limitation, a time, a magnetic flux intensity, and a magnetic field strength of an induced magnetic field including, without limitation, second rotating magnetic field, through auxiliary winding 122.

First cross-sectional area 223, in the exemplary embodiment, of stator winding 211 is greater than second cross-sectional area 224 of auxiliary winding 122, and auxiliary winding 122 is configured to operate at a lesser electrical power value than a value of electrical power at which stator winding 211 operates. Auxiliary winding 122 enables alternately applying and removing corrective torque to rotor 246 and second shaft 110 through at least one of electromechanical interaction with rotor 246 and electromagnetic interaction with stator winding 211. The nature and extent of at least one of electromechanical and electromagnetic interaction of auxiliary winding 122 with at least one of rotor 246, second shaft 110, and stator winding 211 depends on design factors including, without limitation, whether or not at least one auxiliary terminal 240 is galvanically coupled to at least one stator terminal 230, a value of first cross-sectional area 223 compared with second cross-sectional area 224, a position of auxiliary winding 122 within stator 201 relative to stator winding 211, a number of auxiliary windings 122 compared to a number of stator windings 211, and a current, a time, a frequency, and a phase (including a number of phases) of electrical current supplied to auxiliary winding 122 by auxiliary power converter 124 through auxiliary electrical lines 126.

FIG. 3 is a flowchart diagram of an exemplary method 300 of damping torsional oscillations of a shaft in a turbomachinery system that may be used with turbomachinery system 100 shown in FIG. 1. Referring to FIGs. 1, 2, and 3, method 300 includes detecting 302, through sensor 130 coupled to turbomachinery system 100, a physical characteristic of turbomachinery system 100 representative of torsional oscillations. Method 300 also includes determining 304, through data transmitted by sensor 130, a presence of torsional oscillations. Method 300 further includes energizing 306 at least one auxiliary winding 122 to apply a corrective torque to dampen torsional oscillations of at least one of first shaft 106, second shaft 110, and additional shafts rotatably coupled to at least one of turbomachine 102, electrical machine 108, and auxiliary machine 104.

The above-described electrical machine auxiliary stator windings for reduction of torsional oscillations in turbomachinery systems and associated systems and methods reduce sub-synchronous torsional interactions (SSTIs) of shafts and rotating machinery including electrical machines in rotating equipment trains. The above-described embodiments also mitigate undesirable effects of SSTIs and aberrant torques arising therefrom in turbomachinery systems. The above-described embodiments further reduce torque imbalances in electrical machines employed in turbomachinery systems. The above-described electrical machine auxiliary stator windings for reduction of torsional oscillations in turbomachinery systems and associated systems and methods also reduce operating and maintenance costs and increase operational efficiency of turbomachinery systems. The above-described embodiments further provide less complex and less expensive SSTI mitigation devices, systems, and methods that are easier to operate and integrate into existing plant designs. The above-described embodiments also enable installation and maintenance of SSTI mitigation devices and systems without shutting down turbomachinery system operations.

An exemplary technical effect of the above-described electrical machine auxiliary stator windings for reduction of torsional oscillations and associated systems and methods includes at least one of the following: (a) reducing SSTIs of shafts and rotating machinery including electrical machines in rotating equipment trains; (b) mitigating undesirable effects of SSTIs and aberrant torques arising therefrom in turbomachinery systems; (c) reducing torque imbalances in electrical machines employed in turbomachinery systems; (d) reducing operating and maintenance costs and increasing operational efficiency of turbomachinery systems; (e) providing less complex and less expensive SSTI mitigation devices, systems, and methods that are easier to operate and integrate into existing plant designs; and (f) enabling installation and maintenance of SSTI mitigation devices and systems without shutting down turbomachinery system operations.

Exemplary embodiments of electrical machine auxiliary stator windings for reduction of torsional oscillations and associated systems and methods are not limited to the specific embodiments described herein, but rather, components of systems and/or steps of the methods may be utilized independently and separately from other components and/or steps described herein. For example, the methods, systems, and apparatus may also be used in combination with other systems requiring reduction of torsional oscillations of shafts and rotating machinery coupled thereto including, without limitation, rotating machinery trains employing a plurality of electrical machines of varying types, and the associated methods are not limited to practice with only the systems and methods as described herein. Rather, the exemplary embodiments can be implemented and utilized in connection with many other applications, equipment, and systems that may benefit from using the above-described embodiments of electrical machine auxiliary stator windings for reduction of torsional oscillations and associated systems and methods to improve the effectiveness and efficiency of operation for rotating machinery trains and other related systems in various applications.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

Some embodiments involve the use of one or more electronic or computing devices. Such devices typically include a processor, processing device, or controller, such as a general purpose central processing unit (CPU), a graphics processing unit (GPU), a microcontroller, a reduced instruction set computer (RISC) processor, an application specific integrated circuit (ASIC), a programmable logic circuit (PLC), a field programmable gate array (FPGA), a digital signal processing (DSP) device, and/or any other circuit or processing device capable of executing the functions described herein. The methods described herein may be encoded as executable instructions embodied in a computer-readable medium, including, without limitation, a storage device and/or a memory device. Such instructions, when executed by a processing device, cause the processing device to perform at least a portion of the methods described herein. The above examples are exemplary only, and thus are not intended to limit in any way the definition and/or meaning of the term processor and processing device.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An electrical machine (108) comprising:
a shaft (106,110); and
a stator (201) comprising:
at least one stator winding (211);
**characterized in that** the electrical machine (108) comprises
at least one auxiliary winding (122) proximate said at least one stator winding (211),
said at least one stator winding (211) and said at least one auxiliary winding (122) defining a cavity (210) within said stator (201), said shaft (106, 110) configured to be positioned at least partially within the cavity (210), said at least one auxiliary winding (122) configured to alternately energize and de-energize to alternately apply and remove, respectively,
a corrective torque to said shaft (106, 110) to dampen torsional oscillations thereof.

2. The electrical machine (108) in accordance with claim 1, wherein said stator (201) further comprises at least one slot (217) defined therein, said at least one stator winding (211) positioned in said at least one slot (217).

3. The electrical machine (108) in accordance with claim 2, wherein said at least one auxiliary winding (122) is positioned in said at least one slot (217).

4. The electrical machine (108) in accordance with any of claims 1 to 3, wherein said at least one auxiliary winding (122) is positioned radially inward from said at least one stator winding (211).

5. The electrical machine (108) in accordance with any of claims 1 to 4, wherein said at least one auxiliary winding (122) is positioned radially outward from said at least one stator winding (211).

6. The electrical machine (108) in accordance with any of claims 1 to 5, said at least one stator winding (211) having a first cross-sectional area (223), and said at least one auxiliary winding (122) having a second cross-sectional area (224) different from the first cross-sectional area (223).

7. The electrical machine (108) in accordance with any of claims 1 to 6, wherein:
said at least one auxiliary winding (122) comprises a first phase auxiliary winding (225); and
said at least one stator winding (211) comprises a plurality of stator windings (211) comprising at least a first phase stator winding (212) and a second phase stator winding (214).

8. The electrical machine (108) in accordance with any of claims 1 to 7, wherein:
said at least one auxiliary winding (122) comprises a plurality of auxiliary windings (122) comprising at least a first phase auxiliary winding (225) and a second phase auxiliary winding (226); and
said at least one stator winding (211) comprises a first phase stator winding (212).

9. The electrical machine (108) in accordance with any of claims 1 to 8, wherein said at least one stator winding (211) comprises at least one stator terminal (230), said at least one auxiliary winding (122) comprising at least one auxiliary terminal (238), wherein said at least one auxiliary terminal (238) is galvanically isolated from said at least one stator winding (211).

10. The electrical machine (108) in accordance with any of claims 1 to 9, wherein said at least one stator winding (211) comprises at least one stator terminal (230), said at least one auxiliary winding (122) comprising at least one auxiliary terminal (238), wherein said at least one auxiliary terminal (238) is galvanically coupled to said at least one stator winding (211).

11. A turbomachinery system (100) comprising:
a turbomachine (102);
a shaft (106,110);
an auxiliary power converter (124); and
an electrical machine (108) according to claim 1 coupled to said turbomachine (102) through said shafts (106, 110) extending therebetween.

12. The turbomachinery system (100) in accordance with claim 11, wherein:
said electrical machine (108) is not of a switched reluctance type; and
said at least one auxiliary winding (122) is further configured to alternately apply and remove the corrective torque without reducing acoustic noise of said shaft (106,110).

13. The turbomachinery system (100) in accordance with claim 11 or claim 12, said electrical machine (108) further comprising a rotor (246) coupled to said shaft (106,110), said rotor configured to be inserted into the cavity (210), said rotor comprising at least one rotor winding (252), wherein said at least one auxiliary winding (122) is further configured to alternately energize and de-energize to alternately apply and remove, respectively, the corrective torque to said rotor (246).

14. The turbomachinery system (100) in accordance with any of claims 11 to 13 further comprising:
an auxiliary controller (128) coupled to said at least one auxiliary winding (122); and
a sensor (130) coupled to said auxiliary controller (128), said sensor (130) configured to detect a physical characteristic of said turbomachinery system (100) representative of torsional oscillations and transmit a control signal (132) to said auxiliary controller (128) to alternately apply and remove the corrective torque to said shaft (106,110) through said at least one auxiliary winding (122), wherein said sensor (130) is further coupled to at least one of said turbomachine (102), said electrical machine (108), said auxiliary power converter (124), and said shaft (106, 110).

15. A method of damping torsional oscillations of a shaft (106, 110) for a turbomachinery system (100) according to claim 11 that includes a turbomachine (102) coupled to an electrical machine (108) by the shaft (106, 110) extending therebetween, the electrical machine (108) including a stator (201) including at least one stator winding (211) and at least one auxiliary winding (122) proximate the at least one stator winding (211), the at least one stator winding (211) and the at least one auxiliary winding (122) defining a cavity (210) within the stator (201), the shaft (106, 110) configured to be positioned at least partially in the cavity (210), said method comprising:
detecting, through a sensor (130) coupled to the turbomachinery system (100), a physical characteristic of the turbomachinery system (100) representative of torsional oscillations;
determining, through data transmitted by the sensor (130), a presence of torsional oscillations; and
energizing the at least one auxiliary winding (122) to apply a corrective torque to the shaft (106, 110) to dampen torsional oscillations thereof.

## Patentansprüche

1. Elektrische Maschine (108), umfassend:
eine Welle (106, 110) und
einen Stator (201), umfassend:
mindestens eine Statorwicklung (211);
**dadurch gekennzeichnet, dass** die elektrische Maschine (108) umfasst
mindestens eine Hilfswicklung (122) in der Nähe der mindestens einen Statorwicklung (211), wobei die mindestens eine Statorwicklung (211) und die mindestens eine Hilfswicklung (122) einen Hohlraum (210) innerhalb des Stators (201) definieren, wobei die Welle (106, 110) so konfiguriert ist, dass sie mindestens teilweise innerhalb des Hohlraums (210) positioniert ist, wobei die mindestens eine Hilfswicklung (122) so konfiguriert ist, dass sie abwechselnd erregt und entregt wird, um abwechselnd ein Korrekturdrehmoment an die Welle (106, 110) anzulegen bzw. zu entfernen, um deren Torsionsschwingungen zu dämpfen.

2. Elektrische Maschine (108) nach Anspruch 1, wobei der Stator (201) ferner mindestens einen darin definierten Schlitz (217) umfasst, wobei die mindestens eine Statorwicklung (211) in dem mindestens einen Schlitz (217) angeordnet ist.

3. Elektrische Maschine (108) nach Anspruch 2, wobei die mindestens eine Hilfswicklung (122) in dem mindestens einen Schlitz (217) angeordnet ist.

4. Elektrische Maschine (108) nach einem der Ansprüche 1 bis 3, wobei die mindestens eine Hilfswicklung (122) radial einwärts von der mindestens einen Statorwicklung (211) angeordnet ist.

5. Elektrische Maschine (108) nach einem der Ansprüche 1 bis 4, wobei die mindestens eine Hilfswicklung (122) radial auswärts von der mindestens einen Statorwicklung (211) angeordnet ist.

6. Elektrische Maschine (108) nach einem der Ansprüche 1 bis 5, wobei die mindestens eine Statorwicklung (211) einen ersten Querschnittsbereich (223) aufweist und die mindestens eine Hilfswicklung (122) einen zweiten Querschnittsbereich (224) aufweist, der sich von dem ersten Querschnittsbereich (223) unterscheidet.

7. Elektrische Maschine (108) nach einem der Ansprüche 1 bis 6, wobei:
die mindestens eine Hilfswicklung (122) eine erste Phasenhilfswicklung (225) umfasst und
die mindestens eine Statorwicklung (211) eine Vielzahl von Statorwicklungen (211) umfasst, die mindestens eine erste Phasenstatorwicklung (212) und eine zweite Phasenstatorwicklung (214) umfassen.

8. Elektrische Maschine (108) nach einem der Ansprüche 1 bis 7, wobei:
die mindestens eine Hilfswicklung (122) eine Vielzahl von Hilfswicklungen (122) umfasst, die mindestens eine erste Phasenhilfswicklung (225) und eine zweite Phasenhilfswicklung (226) umfassen; und
die mindestens eine Statorwicklung (211) eine erste Phasenstatorwicklung (212) umfasst.

9. Elektrische Maschine (108) nach einem der Ansprüche 1 bis 8, wobei die mindestens eine Statorwicklung (211) mindestens einen Statoranschluss (230) umfasst, wobei die mindestens eine Hilfswicklung (122) mindestens einen Hilfsanschluss (238) umfasst, wobei der mindestens eine Hilfsanschluss (238) von der mindestens einen Statorwicklung (211) galvanisch isoliert ist.

10. Elektrische Maschine (108) nach einem der Ansprüche 1 bis 9, wobei die mindestens eine Statorwicklung (211) mindestens einen Statoranschluss (230) umfasst, wobei die mindestens eine Hilfswicklung (122) mindestens einen Hilfsanschluss (238) umfasst, wobei der mindestens eine Hilfsanschluss (238) mit der mindestens einen Statorwicklung (211) galvanisch gekoppelt ist.

11. Turbomaschinen-System (100), umfassend:
eine Turbomaschine (102);
eine Welle (106, 110);
einen Hilfsleistungswandler (124) und
eine elektrische Maschine (108) nach Anspruch 1, die mit der Turbomaschine (102) durch die sich dazwischen erstreckende Welle (106, 110) gekoppelt ist.

12. Turbomaschinen-System (100) nach Anspruch 11, wobei:
die elektrische Maschine (108) nicht vom Typ der geschalteten Reluktanz ist und
die mindestens eine Hilfswicklung (122) ferner so konfiguriert ist, dass sie das Korrekturdrehmoment abwechselnd anlegt und entfernt, ohne das akustische Geräusch der Welle (106, 110) zu reduzieren.

13. Turbomaschinen-System (100) nach Anspruch 11 oder Anspruch 12, wobei die elektrische Maschine (108) ferner einen Rotor (246) umfasst, der mit der Welle (106, 110) gekoppelt ist, wobei der Rotor konfiguriert ist, um in den Hohlraum (210) eingesetzt zu werden, wobei der Rotor mindestens eine Rotorwicklung (252) umfasst, wobei die mindestens eine Hilfswicklung (122) ferner so konfiguriert ist, dass sie abwechselnd erregt und entregt wird, um abwechselnd das Korrekturdrehmoment an den Rotor (246) anzulegen bzw. zu entfernen.

14. Turbomaschinen-System (100) nach einem der Ansprüche 11 bis 13, ferner umfassend:
eine Hilfssteuerung (128), die mit der mindestens einen Hilfswicklung (122) gekoppelt ist; und
einen Sensor (130), der mit der Hilfssteuerung (128) gekoppelt ist, wobei der Sensor (130) so konfiguriert ist, dass er eine physikalische Eigenschaft des Turbomaschinen-Systems (100) erfasst, die für Torsionsschwingungen repräsentativ ist, und ein Steuersignal (132) an die Hilfssteuerung (128) überträgt, um abwechselnd das Korrekturdrehmoment durch die mindestens eine Hilfswicklung (122) an die Welle (106, 110) anzulegen und zu entfernen, wobei der Sensor (130) ferner mit mindestens einer der Turbomaschine (102), der elektrischen Maschine (108), dem Hilfsleistungswandler (124) und der Welle (106, 110) gekoppelt ist.

15. Verfahren zum Dämpfen von Torsionsschwingungen einer Welle (106, 110) für ein Turbomaschinen-System (100) nach Anspruch 11, das eine Turbomaschine (102) umfasst, die mit einer elektrischen Maschine (108) durch die sich dazwischen erstreckende Welle (106, 110) gekoppelt ist, wobei die elektrische Maschine (108) einen Stator (201) einschließlich mindestens einer Statorwicklung (211) und mindestens einer Hilfswicklung (122) in der Nähe der mindestens einen Statorwicklung (211) einschließt, wobei die mindestens eine Statorwicklung (211) und die mindestens eine Hilfswicklung (122) einen Hohlraum (210) innerhalb des Stators (201) definieren, wobei die Welle (106, 110) konfiguriert ist, um mindestens teilweise in dem Hohlraum (210) positioniert zu werden, wobei das Verfahren umfasst:
Erfassen durch einen mit dem Turbomaschinen-System (100) gekoppelten Sensor (130) einer physikalischen Eigenschaft des Turbomaschinen-Systems (100), die repräsentativ für Torsionsschwingungen ist;
Bestimmen durch von dem Sensor (130) übertragene Daten des Vorhandenseins von Torsionsschwingungen und
Erregen der mindestens einen Hilfswicklung (122), um ein Korrekturdrehmoment auf die Welle (106, 110) aufzubringen, um deren Torsionsschwingungen zu dämpfen.

## Revendications

1. Machine électrique (108) comprenant :
un arbre (106, 110) ; et
un stator (201) comprenant :
au moins un enroulement de stator (211) ;
**caractérisée en ce que** la machine électrique (108) comprend
au moins un enroulement auxiliaire (122) à proximité dudit au moins un enroulement de stator (211), ledit au moins un enroulement de stator (211) et ledit au moins un enroulement auxiliaire (122) définissant une cavité (210) au sein dudit stator (201), ledit arbre (106, 110) configuré pour être positionné au moins partiellement au sein de la cavité (210), ledit au moins un enroulement auxiliaire (122) configuré pour s'activer et se désactiver en alternance pour appliquer et supprimer en alternance, respectivement, un couple correcteur audit arbre (106, 110) pour amortir des oscillations de torsion de celui-ci.

2. Machine électrique (108) selon la revendication 1, dans laquelle ledit stator (201) comprend en outre au moins une fente (217) définie en son sein, ledit au moins un enroulement de stator (211) positionné dans ladite au moins une fente (217).

3. Machine électrique (108) selon la revendication 2, dans laquelle ledit au moins un enroulement auxiliaire (122) est positionné dans ladite au moins une fente (217).

4. Machine électrique (108) selon l'une quelconque des revendications 1 à 3, dans laquelle ledit au moins un enroulement auxiliaire (122) est positionné radialement vers l'intérieur par rapport audit au moins un enroulement de stator (211).

5. Machine électrique (108) selon l'une quelconque des revendications 1 à 4, dans laquelle ledit au moins un enroulement auxiliaire (122) est positionné radialement vers l'extérieur par rapport audit au moins un enroulement de stator (211).

6. Machine électrique (108) selon l'une quelconque des revendications 1 à 5, ledit au moins un enroulement de stator (211) ayant une première aire en coupe transversale (223), et ledit au moins un enroulement auxiliaire (122) ayant une deuxième aire en coupe transversale (224) différente de la première aire en coupe transversale (223).

7. Machine électrique (108) selon l'une quelconque des revendications 1 à 6, dans laquelle :
ledit au moins un enroulement auxiliaire (122) comprend un enroulement auxiliaire de première phase (225) ; et
ledit au moins un enroulement de stator (211) comprend une pluralité d'enroulements de stator (211) comprenant au moins un enroulement de stator de première phase (212) et un enroulement de stator de deuxième phase (214).

8. Machine électrique (108) selon l'une quelconque des revendications 1 à 7, dans laquelle :
ledit au moins un enroulement auxiliaire (122) comprend une pluralité d'enroulement auxiliaire (122) comprenant au moins un enroulement auxiliaire de première phase (225) et un enroulement auxiliaire de deuxième phase (226) ; et
ledit au moins un enroulement de stator (211) comprend un enroulement de stator de première phase (212).

9. Machine électrique (108) selon l'une quelconque des revendications 1 à 8, dans laquelle ledit au moins un enroulement de stator (211) comprend au moins une borne de stator (230), ledit au moins un enroulement auxiliaire (122) comprenant au moins une borne auxiliaire (238), dans laquelle ladite au moins une borne auxiliaire (238) est isolée de manière galvanique par rapport audit au moins un enroulement de stator (211).

10. Machine électrique (108) selon l'une quelconque des revendications 1 à 9, dans laquelle ledit au moins un enroulement de stator (211) comprend au moins une borne de stator (230), ledit au moins un enroulement auxiliaire (122) comprenant au moins une borne auxiliaire (238), dans laquelle ladite au moins une borne auxiliaire (238) est couplée de manière galvanique audit au moins un enroulement de stator (211).

11. Système de turbomachine (100) comprenant :
une turbomachine (102) ;
un arbre (106, 110) ;
un convertisseur de puissance auxiliaire (124) ; et
une machine électrique (108) selon la revendication 1 couplée à ladite turbomachine (102) par l'intermédiaire dudit arbre (106, 110) s'étendant entre elles.

12. Système de turbomachine (100) selon la revendication 11, dans lequel :
ladite machine électrique (108) n'est pas d'un type à réluctance commutée ; et
ledit au moins un enroulement auxiliaire (122) est en outre configuré pour appliquer et supprimer en alternance le couple correcteur sans réduire le bruit acoustique dudit arbre (106, 110).

13. Système de turbomachine (100) selon la revendication 11 ou la revendication 12, ladite machine électrique (108) comprenant en outre un rotor (246) couplé audit arbre (106, 110), ledit rotor configuré pour être inséré dans la cavité (210), ledit rotor comprenant au moins un enroulement de rotor (252), dans lequel ledit au moins un enroulement auxiliaire (122) est en outre configuré pour s'activer et se désactiver en alternance pour appliquer et supprimer en alternance, respectivement, le couple correcteur audit rotor (246).

14. Système de turbomachine (100) selon l'une quelconque des revendications 11 à 13 comprenant en outre :
un contrôleur auxiliaire (128) couplé audit au moins un enroulement auxiliaire (122) ; et
un capteur (130) couplé audit contrôleur auxiliaire (128), ledit capteur (130) configuré pour détecter une caractéristique physique dudit système de turbomachine (100) représentative d'oscillations de torsion et transmettre un signal de commande (132) audit contrôleur auxiliaire (128) pour appliquer et supprimer en alternance le couple correcteur audit arbre (106, 110) par l'intermédiaire dudit au moins un enroulement auxiliaire (122), dans lequel ledit capteur (130) est en outre couplé à au moins l'un parmi ladite turbomachine (102), ladite machine électrique (108), ledit convertisseur de puissance auxiliaire (124) et ledit arbre (106, 110).

15. Procédé d'amortissement d'oscillations de torsion d'un arbre (106, 110) pour un système de turbomachine (100) selon la revendication 11 qui inclut une turbomachine (102) couplée à une machine électrique (108) par l'arbre (106, 110) s'étendant entre elles, la machine électrique (108) incluant un stator (201) incluant au moins un enroulement de stator (211) et au moins un enroulement auxiliaire (122) à proximité de l'au moins un enroulement de stator (211), l'au moins un enroulement de stator (211) et l'au moins un enroulement auxiliaire (122) définissant une cavité (210) au sein du stator (201), l'arbre (106, 110) configuré pour être positionné au moins partiellement dans la cavité (210), ledit procédé comprenant :
la détection, par l'intermédiaire d'un capteur (130) couplé au système de turbomachine (100), d'une caractéristique physique du système de turbomachine (100) représentative d'oscillations de torsion ;
la détermination, par l'intermédiaire de données transmises par le capteur (130), d'une présence d'oscillations de torsion ; et
l'activation de l'au moins un enroulement auxiliaire (122) pour appliquer un couple correcteur à l'arbre (106, 110) pour amortir les oscillations de torsion de celui-ci.
